(19) Europäisches Patentamt
European Patent Office
Office européen des brevets

(11) **EP 3 151 404 A1**

(12) **EUROPÄISCHE PATENTANMELDUNG**

(43) Veröffentlichungstag:
**05.04.2017 Patentblatt 2017/14**

(51) Int Cl.:
*H02M 1/12* (2006.01)  *H02M 1/42* (2007.01)
*H02J 3/01* (2006.01)  *H02M 5/458* (2006.01)

(21) Anmeldenummer: **15187656.2**

(22) Anmeldetag: **30.09.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Siemens Aktiengesellschaft**
**80333 München (DE)**

(72) Erfinder:
• **Maul, Christian**
**90409 Nürnberg (DE)**
• **Nagengast, Peter**
**90482 Nürnberg (DE)**

(54) **RÜCKSPEISEFÄHIGES AKTIVES FILTER**

(57) Die Erfindung betrifft ein aktives Filter (1) mit einem wechselspannungsseitigen Anschluss (9) und einem Gleichrichter (11), wobei der Gleichrichter (11) abschaltbare Halbleiter (26) aufweist. Zur Verbesserung der Versorgung eines rückspeisefähigen elektrischen Verbrauchers wird vorgeschlagen, dass das aktive Filter (1) einen gleichspannungsseitigen Anschluss (10), einen Koppelkondensator (12) und ein Kopplungselement (13) aufweist, wobei der gleichspannungsseitige Anschluss (10) des aktiven Filters (1) mit einem Gleichspannungszwischenkreis (21) eines Energieversorgungssystems (2) elektrisch verbindbar ist, wobei zwischen dem Koppelkondensator (12) und dem gleichspannungsseitigen Anschluss (10) das Kopplungselement (13) derart angeordnet ist, dass mittels des Kopplungselements (13) ein Energiefluss über den gleichspannungsseitigen Anschluss (10) zwischen dem aktiven Filter (1) und dem Gleichspannungszwischenkreis (21) des Energieversorgungssystems (2) beeinflussbar ist. Die Erfindung betrifft weiter eine Rückspeiseanordnung (3) mit einem solchen aktiven Filter (1) und einem Energieversorgungssystem (2) sowie ein Verfahren zum Betreiben eines solchen aktiven Filters (1).

FIG 1

EP 3 151 404 A1

**Beschreibung**

Die Erfindung betrifft ein aktives Filter mit einem wechselspannungsseitigen Anschluss und einem Gleichrichter, wobei der Gleichrichter abschaltbare Halbleiter aufweist, wobei der wechselspannungsseitige Anschluss mit einem Energieversorgungsnetz verbindbar ist. Die Erfindung betrifft weiter eine Rückspeiseanordnung mit einem solchen aktiven Filter und einem Energieversorgungssystem, wobei das Energieversorgungssystem einen wechselspannungsseitigen Netzanschluss, einen Eingangsgleichrichter, einen Gleichspannungszwischenkreis und einen rückspeisefähigen Verbraucher aufweist. Ferner betrifft die Erfindung ein Verfahren zum Betreiben eines solchen aktiven Filters, wobei der wechselspannungsseitige Anschluss des aktiven Filters mit dem Energieversorgungsnetz verbunden ist.

Häufig werden elektrische Verbraucher für die Versorgung mit elektrischer Energie in einem Energieversorgungssystem angeordnet und mit einem Energieversorgungsnetz verbunden. Dabei wird der elektrische Verbraucher über einen Eingangsgleichrichter und einem Gleichspannungszwischenkreis mit dem Energieversorgungsnetz verbunden. Zwischen Gleichspannungszwischenkreis und elektrischem Verbraucher ist oftmals ein Stellglied angeordnet, welches physikalische Größen des Verbrauchers steuern oder regeln kann.

Eine typische Anwendung für ein Energieversorgungssystem sind elektrische Antriebe. Bei elektrischen Antrieben werden ein oder mehrere Motoren über einen Eingangsgleichrichter und einem Gleichspannungszwischenkreis aus einem Energieversorgungsnetz versorgt. Gleichspannungsmotoren können direkt oder unter Verwendung eines Gleichspannungsstellers als Stellglied mit dem Gleichspannungszwischenkreis verbunden werden. Bei Wechselstrommotoren, sowohl bei einphasigen wie auch dreiphasigen Motoren, wird als Stellglied zwischen Motor und Gleichspannungszwischenkreis ein Wechselrichter angeordnet. Mit diesem Wechselrichter lassen sich beispielsweise Drehmoment, Drehzahl oder Leistung sowie der magnetische Fluss im Motor steuern und/oder regeln.

Die Kombination von Eingangsgleichrichter, Gleichspannungszwischenkreis und Wechselrichter wird auch als AC/AC-Gerät bezeichnet.

In vielen einfachen und kostensensiblen Anwendungen sind auch bis zu hohen Antriebsleistungen Antriebe mit AC/AC-Geräten im Einsatz. Zur kostengünstigen Realisierung dieser Antriebe ist der Eingangsgleichrichter dabei oftmals mit Dioden oder Thyristoren, die in einer Brückenschaltung angeordnet sind, ausgeführt. Da motorseitigen Wechselrichter dabei mit abschaltbaren Halbleitern ausgeführt ist, die eine Umkehrung der Polarität des Gleichspannungszwischenkreises nicht erlauben, ist eine Rückspeisung von Energie, beispielsweise beim Bremsen des Antriebs, in das Energieversorgungsnetz bei der Verwendung einer Dioden- oder Thyristorbrücke nicht möglich. Ist auch das Abbremsen des Antriebes gefordert, wird üblicherweise zusätzlich ein Bremschopper mit Bremswiderstand in den Gleichspannungszwischenkreis hinzugefügt, um die anfallende Bremsenergie aus dem Gleichspannungszwischenkreis mittels Wärme an die Umgebung abzuführen.

Ist bei einem Antrieb dabei auch die Einhaltung strenger Anforderungen bei den Netzrückwirkungen wie z.B. die Norm IEEE 519 gefordert, wird üblicherweise netzseitig ein passives Filter vorgeschaltet oder ein aktives Filter verwendet. Bei einem aktiven Filter wird die Filterwirkung mit Hilfe von Halbleitern erzielt. Sind das Abbremsen des Antriebs und geringe Netzrückwirkungen gefordert, müssen damit erhebliche Mehrkosten in Kauf genommen werden, da der Antrieb sowohl mit einem Filter (aktiv und/oder passiv) und einem rückspeisefähigen Gleichrichter ausgestattet sein muss. Das AC/AC-Gerät umfasst dann einen netzseitigen, voll rückspeisefähigen Eingangsgleichrichter mit abschaltbaren Halbleitern, beispielsweise mit IGBTs, und ist an der Verbindung zum Energieversorgungsnetz mit einem angepassten Filter verbunden. Wegen der hohen Kosten ist ein solcher Antrieb meist nicht wirtschaftlich.

Daher haben sich am Markt derzeit nicht rückspeisefähige Energieversorgungssysteme mit Bremschopper und Widerstand aufgrund ihrer geringeren Herstellkosten durchgesetzt.

Der Erfindung liegt die Aufgabe zugrunde, ein System zur Versorgung eines elektrischen Verbrauchers mit elektrischer Energie, insbesondere eines rückspeisefähigen elektrischen Verbrauchers, zu verbessern.

Die Aufgabe wird durch ein aktives Filter, aufweisend einen wechselspannungsseitigen Anschluss, einen gleichspannungsseitigen Anschluss, einen Gleichrichter, einen Koppelkondensator und Kopplungselement gelöst, wobei der Gleichrichter abschaltbare Halbleiter aufweist, wobei der wechselspannungsseitige Anschluss mit einem Energieversorgungsnetz verbindbar ist, wobei der Gleichrichter wechselspannungsseitig mit dem wechselspannungsseitigen Anschluss verbunden ist, wobei der Gleichrichter gleichspannungsseitig elektrisch parallel zum Koppelkondensator angeordnet ist, wobei der gleichspannungsseitige Anschluss des aktiven Filters mit einem Gleichspannungszwischenkreis eines Energieversorgungssystems elektrisch verbindbar ist, wobei zwischen dem Koppelkondensator und dem gleichspannungsseitigen Anschluss des aktiven Filters das Kopplungselement derart angeordnet ist, dass mittels des Kopplungselements ein Energiefluss über den gleichspannungsseitigen Anschluss zwischen dem aktiven Filter und dem Gleichspannungszwischenkreis des Energieversorgungssystems beeinflussbar ist. Die Aufgabe wird weiter durch eine Rückspeiseanordnung mit einem solchen aktiven Filter und einem Energieversorgungssystem gelöst, wobei das Energieversorgungssystem einen wechselspannungsseitigen Netzanschluss, einen Eingangsgleichrichter, einen Gleichspannungszwischenkreis und einen rückspeisefähigen Verbraucher aufweist, wobei der Eingangsgleichrichter nichtabschaltbare Halbleiter aufweist, wobei der Netzanschluss und der Gleichspannungszwischenkreis über den Eingangsgleichrichter miteinander elektrisch verbunden sind, wobei der wechselspannungsseitige Anschluss des aktiven Filters mit dem Energieversorgungsnetz verbunden ist, wobei der wechselspannungsseitige Netzanschluss mit dem Energieversorgungsnetz oder einem weiteren Energieversorgungsnetz verbunden ist, wobei der gleichspannungsseitige Anschluss des aktiven Filters mit dem Gleichspannungszwischenkreis des Energieversorgungssystems elektrisch verbunden ist, wobei mittels des aktiven Filters eine vom rückspeisefähigen Verbraucher in den Gleichspannungszwischenkreis rückgespeiste Energie in das Energieversorgungsnetz einspeisbar ist. Ferner wird die Aufgabe durch ein Verfahren zum Betreiben eines solchen aktiven Filters gelöst, wobei der wechselspannungsseitige Anschluss des aktiven Filters mit dem Energieversorgungsnetz verbunden ist, wobei die abschaltbaren Halbleiter des Gleichrichters zumindest zeitweise derart angesteuert werden, dass elektrische Leistung, insbesondere elektrische Wirkleitung, von dem gleichspannungsseitigen Anschluss in das Energieversorgungsnetz übertragen wird.

Weitere Ausgestaltungen der Erfindung sind in den abhängigen Ansprüchen angegeben.

Der Erfindung liegt die Erkenntnis zugrunde, dass durch die geeignete Anordnung eines aktiven Filters mit einem Energieversorgungssystem, das einen einfachen, nicht rückspeisefähigen netzseitigen Eingangsgleichrichter mit Dioden oder Thyristoren umfasst, auf den Bremschopper mit Bremswiderstand verzichtet werden kann. Die geeignete Anordnung kann dadurch erreicht werden, dass der netzseitige Anschluss des aktiven Filters am Netzanschlusspunkt phasenweise mit den wechselspannungsseitigen Netzanschluss des AC/AC-Gerätes verbunden ist und dass der gleichspannungsseitige Anschluss des aktiven Filters über ein Kopplungselement mit dem Gleichspannungszwischenkreis des AC/AC-Gerätes verbunden ist.

Im motorischen Betrieb des Antriebes bewirkt das aktiven Filters die Reduktion von Netzrückwirkungen. Dabei werden Oberschwingungen des Energieversorgungssystems, insbesondere des AC/AC Gerätes, kompensiert. Ebenso ist darüber hinaus oder alternativ die Kompensation von Blindleistung, insbesondere Grundschwingungsverschiebungsblindleitung, möglich. In diesem Betriebsfall liegt die Spannung am Koppelkondensator des aktiven Filters oberhalb des Wertes der gleichgerichteten Netzspannung $(\sqrt{2} \times U_{Netz,eff})$. In diesem Fall sperrt das Kopplungselement den Energieaustausch am gleichspannungsseitigen Anschluss des aktiven Filters mittels des Kopplungselementes. Im generatorischen Betrieb des Antriebes, bei dem der Motor durch Bremsen Energie in den Gleichspannungszwischenkreis überträgt, arbeitet das aktive Filter als rückspeisefähiger, aktiver Gleichrichter. Dabei ermöglicht das Kopplungselement die Energieübertragung zwischen Gleichspannungszwischenkreis des Energieversorgungssystems, insbesondere des AC/AC-Gerätes des Antriebs, zum Koppelkondensator des aktiven Filters. Mittels des Gleichrichters kann diese Energie in das Energieversorgungsnetz eingespeist werden. Im Falle eines Antriebs kann somit die Bremsenergie des Motors über den Koppelkondensator und den mit dem Koppelkondensator verbundenen Gleichrichter in das Energieversorgungsnetz zurückgespeist werden.

Das aktive Filter kann dabei in der Leistungsfähigkeit auf die anfallende Rückspeiseleistung bzw. Bremsleistung ausgelegt werden. Da häufig die rückzuspeisende Leistung kleiner ist als die aus dem Energieversorgungsnetz zu beziehende Leistung können die Halbleiter des Gleichrichters des aktiven Filters kleiner, teilweise deutlich kleiner, dimensioniert werden. Dadurch ist das System gut skalierbar.

Die im Vergleich zu einer rückzuspeisenden Leistung größere, aus dem Energieversorgungsnetz zu beziehende Leistung wird über den Eingangsgleichrichter zum elektrischen Verbraucher übertragen. Der Eingangsgleichrichter weist vorteilhafterweise eine Diodenbrücke oder einer Thyristorbrücke auf, mit der der Eingangsgleichrichter kostengünstig herstellbar ist. Die nachteiligerweise durch die Dioden- oder Thyristorbrücke entstehenden Oberschwingungen können mittels des aktiven Filters kompensiert werden. Ebenso übernimmt das aktive Filter die Rückspeisung von Energie in das Energieversorgungsnetz, da der Eingangsgleichrichter mit Dioden- oder Thyristorbrücke nicht rückspeisefähig ist, d.h. keine Energie von der Gleichspannungsseite des Eingangsgleichrichters zur Wechselspannungsseite des Eingangsgleichrichters übertragen kann.

Die Leistungsfähigkeit des aktiven Filters, insbesondere die Leistungsfähigkeit der darin angeordneten abschaltbaren Halbleiter des Gleichrichters, kann dabei in Abhängigkeit von der rückzuspeisenden Leistung bzw. der rückzuspeisenden Energie vorgenommen werden. Da die Leistung bzw. Energie häufig kleiner ist als die aus dem Energieversorgungsnetz zu beziehende Energie, können die im Vergleich zu nichtabschaltbaren Halbleiter teureren abschaltbaren Halbleiter, wie beispielsweise IGBTs, deutlich kleiner dimensioniert werden, als die nichtabschaltbaren Halbleiter des Eingangsgleichrichters.

Für den Betrieb von aktivem Filter und Energieversorgungssystem ist es wichtig, dass nicht Gleichrichter des aktiven Filters und Eingangsgleichrichter des Energieversorgungssystems gleichzeitig aktiv sind, d.h. Leistung auf die Gleichspannungsseite übertragen, wenn diese über den Gleichspannungszwischenkreis miteinander verbunden sind. Über diese Verbindung kann es zu Ausgleichsvorgängen, auch als Kreisströme bezeichnet, zwischen den einzelnen Phasen des Energieversorgungsnetzes kommen. Aufgabe des Kopplungselementes ist es, diese Ausgleichsvorgänge zu verhindern. Dazu kann in einem einfachen Fall während der Energieversorgung über den Eingangsgleichrichter die gleichspannungsseitige Verbindung am Zwischenkreis durch das Kopplungselement elektrisch unterbrochen werden. Alternativ oder ergänzend ist es möglich, den Energieaustausch zwischen Gleichspannungszwischenkreis und gleichspannungsseitigen Anschluss des aktiven Filters gesteuert vorzunehmen und damit die Ausbildung von Ausgleichsvorgängen zu verhindern.

In vorteilhafter Weise werden der wechselspannungsseitige Anschluss des aktiven Filters und der wechselspannungsseitige Netzanschluss des Energieversorgungssystems mit dem gleichen Energieversorgungsnetz verbunden. Es hat sich aber ebenfalls als vorteilhaft erwiesen, ein aktives Filter beispielsweise zur Kompensation von Oberschwingungen für mehrere Energieversorgungsysteme vorzusehen. Dann kann es günstig sein, das aktive Filter mit einem anderen Energieversorgungsnetz zu verbinden. Als Beispiel für ein anderes Energieversorgungsnetz kommt dabei beispielsweise ein übergeordnetes Netz mit höherer Spannung in Frage.

Das aktive Filter sowie die Rückspeiseanordnung haben den Vorteil, dass eine beliebige Skalierung von Ein- und Rückspeiseleistung realisierbar ist. Darüber hinaus kann ein für Abbremsvorgänge vorhandener Bremschopper mit Bremswiderstand entfallen. Anstelle von Bremschopper mit Bremswiderstand im Gleichspannungszwischenkreis wird ein Kopplungselement im aktiven Filter angeordnet. Im einfachen und kostengünstigen Fall kann dies durch eine Diode geschehen. Das aktive Filter kann während des Gleichrichtbetriebs, bei dem Energie durch das Energieversorgungssystem aus dem Energieversorgungsnetz bezogen wird, als aktives Filter verwendet werden um Harmonische im Netzstrom/der Netzspannung zu eliminieren oder zu reduzieren. Die Regelung des aktiven Filters kann unabhängig von der Regelung des Energieflusses über das Energieversorgungssystem vorgenommen werden. Damit wird ein nahezu sinusförmiger Strom zurück ins Netz gespeist bzw. aus dem Netz gezogen. Damit ist die Gesamteffizienz des Systems sehr hoch, da nur geringe Gleichrichtverluste durch den Eingangsgleichrichter des AC/AC-Gerätes im motorischen Betrieb anfallen. Der Wirkungsgrad wird zusätzlich dadurch erhöht, dass ein Rückspeisen der überschüssigen Energie aus dem Gleichspannungszwischenkreis des AC/AC-Gerätes im generatorischen Betrieb (Bremsbetrieb) möglich ist und damit eine Umwandlung in Abwärme entfällt.

Bei einer vorteilhaften Ausgestaltung der Erfindung weist das Kopplungselement einen Halbleiter, insbesondere eine Diode, auf, wobei der Halbleiter derart zwischen Koppelkondensator und gleichspannungsseitigem Anschluss angeordnet ist, dass über den gleichspannungsseitigen Anschluss elektrische Energie zum Koppelkondensator übertragbar ist und ein Energiefluss von Koppelkondensator zu dem gleichspannungsseitigen Anschluss verhindert wird. Damit kann sichergestellt werden, dass die elektrische Verbindung zwischen Gleichspannungszwischenkreis und gleichspannungsseitigem Anschluss getrennt ist, wenn der Eingangsgleichrichter Leistung zum elektrischen Verbraucher überträgt. Dadurch können zuverlässig Ausgleichsvorgänge zwischen den einzelnen Phasen des Energieversorgungsnetzes über die gleichspannungsseitige Verbindung von aktivem Filter und Energieversorgungssystem verhindert werden.

Als besonders vorteilhaft hat es sich dabei erwiesen, die Diode in die Verbindung zwischen positiven Potential des Gleichspannungszwischenkreises und positiven Potential des Koppelkondensators derart anzuordnen, dass die Anode der Diode mit dem positiven Potential des Gleichspannungszwischenkreises und die Kathode der Diode mit dem positiven Potential des Koppelkondensators verbunden ist. Alternativ oder ergänzend hat es sich als vorteilhaft erwiesen, die Diode in die Verbindung zwischen negativen Potential des Gleichspannungszwischenkreises und negativen Potential des Koppelkondensators derart anzuordnen, dass die Kathode der Diode mit dem negativen Potential des Gleichspannungszwischenkreises und die Anode der Diode mit dem negativen Potential des Koppelkondensators verbunden ist. Damit ist sichergestellt, dass elektrische Energie vom Gleichspannungszwischenkreis zum aktiven Filter übertragen werden kann, während die Übertragung von elektrischer Energie vom aktiven Filter zum Gleichspannungszwischenkreis verhindert wird.

Darüber hinaus wird durch diese Anordnung sichergestellt, dass die gleichspannungsseitige Verbindung zwischen aktivem Filter und Gleichspannungszwischenkreis unterbrochen ist, wenn Energie über den Eingangsgleichrichter übertragen wird. Es kann nur Energie über den Eingangsgleichrichter übertragen werden, wenn die Spannung des Gleichspannungszwischenkreises den Wert $\sqrt{2} \times U_{Netz,eff}$ nicht überschreitet. In diesem Fall sind zwei Dioden des Eingangsgleichrichters leitend. Bei der Ausführung als Thyristorbrücken können nur unter der genannten Bedingung zwei Thyristoren in den leitenden Zustand versetzt werden. Dies ist erforderlich um elektrische Energie aus dem Energieversorgungsnetz über den Eingangsgleichrichter an den elektrischen Verbraucher zu übertragen. Wenn der Gleichspannungszwischenkreis eine Spannung von maximal

$$\sqrt{2} \times U_{Netz,eff}$$ aufweist, sperrt die Diode des Kopplungselements, da das aktive Filter an dem Koppelkondensator mit einer Spannung größer als

$$\sqrt{2} \times U_{Netz,eff}$$ betrieben wird. Dies ist erforderlich, da der Gleichrichter des aktiven Filters abschaltbare Halbleiter aufweist. Die Differenz zwischen der Spannung an dem Koppelkondensator und der Spannung des Gleichspannungszwischenkreises liegt im Falle des energieübertragenden Eingangsgleichrichters als Sperrspannung an der Diode an. Speist jetzt der elektrische Verbraucher Energie in den Gleichspannungszwischenkreis ein, so steigt die Spannung des Gleichspannungszwischenkreises an, da der Eingangsgleichrichter aufgrund seiner nichtabschaltbaren Halbleiter in dieser Anordnung nicht in der Lage ist, Energie in das Energieversorgungsnetz rückzuspeisen. Übersteigt der Wert der Spannung des Gleichspannungszwischenkreises den Wert der Spannung des Koppelkondensators, so wird die Diode leitend und eine Leistung kann vom Gleichspannungszwischenkreis zum aktiven Filter übertragen werden. Durch eine Spannung von größer

$$\sqrt{2} \times U_{Netz,eff}$$

im Gleichspannungszwischenkreis ist zugleich sichergestellt, dass der Eingangsgleichrichter keine elektrische Leistung überträgt. Dadurch ist der parallele Betrieb der beiden Einheiten an einem Gleichspannungszwischenkreis möglich.

Bei einer vorteilhaften Ausgestaltung der Erfindung wird das Kopplungselement durch einen DC/DC Steller gebildet, wobei der DC/DC Steller derart ausgebildet ist, dass ein Energiefluss über den gleichspannungsseitigen Anschluss zwischen dem aktiven Filter und Gleichspannungszwischenkreis des Energieversorgungssystems steuerbar ist. Der DC/DC Steller wird an einer Seite mit den beiden Anschlüssen des Koppelkondensators verbunden und an der anderen Seite mit den beiden Anschlüssen des Gleichspannungszwischenkreises verbunden. Wird ein DC/DC-Steller eingesetzt, kann bei entsprechender Dimensionierung des aktiven Filters auch im motorischen Betrieb des Antriebes zusätzliche Einspeiseleistung am Gleichspannungszwischenkreis des AC/AC-Gerätes zur Verfügung gestellt werden. Hierbei ermöglicht der DC/DC Steller den Energiefluss über die unterschiedlichen Spannungsniveaus der beiden Gleichspannungszwischenkreise. Durch den steuerbaren Energieaustausch über den DC/DC Steller können unerwünschte Ausgleichsvorgänge zwischen unterschiedlichen Phasen des Energieversorgungsnetzes sicher vermieden werden. Als besonders vorteilhaft hat es sich erwiesen, den DC/DC Steller mit einer galvanischen Trennung auszuführen. Somit können auch ohne aktive Steuerung oder Regelung unerwünschte Ausgleichsvorgänge zwischen den Phasen des Energieversorgungsnetzes zuverlässig vermieden werden.

Beim Einsatz des DC/DC-Stellers kann damit der für einige Anwendungen sehr kostengünstige Mischbetrieb einfacher Eingangsgleichrichter mit Dioden oder Thyristoren und aktiven, rückspeisefähigen und netzfrequentgetakteten Gleichrichtern mit IGBTs durch einen Mischbetrieb einfacher Gleichrichter mit Dioden oder Thyristoren und einem aktiven Filter mit DC/DC-Steller ersetzt werden. Damit ergibt sich der Vorteil einer höheren Robustheit bei Netzspannungsschwankungen. Darüber hinaus können auch die Netzrückwirkungen in Form von Oberschwingungsbelastung deutlich reduziert werden. Die Kosten dieser Anordnung sind im Vergleich zu einem Energieversorgungssystem mit einem Eingangsgleichrichter mit abschaltbaren Halbleitern, wie beispielsweise IGBTs, deutlich geringer.

Bei einer vorteilhaften Ausgestaltung der Rückspeiseanordnung ist zwischen dem Energieversorgungsnetz und wechselspannungsseitigen Anschluss ein Transformator angeordnet. Mit Hilfe des Übersetzungsverhältnisses kann das Spannungsniveau an dem gleichspannungsseitigen Anschluss des aktiven Filters verändert werden. Damit kann der Spannungswert beeinflusst, bei dem eine Rückspeisung von Energie über das aktive Filter möglich ist. Darüber hinaus werden durch die galvanische Trennung des Transformators Ausgleichvorgänge zwischen unterschiedlichen Phasen des Energieversorgungsnetzes über die gleichspannungsseitige Verbindung von aktivem Filter und Gleichspannungszwischenkreis zuverlässig vermieden.

Im Folgenden wird die Erfindung anhand der in den Figuren dargestellten Ausführungsbeispiele näher beschrieben und erläutert. Es zeigen:

FIG 1             ein aktives Filter und
FIG 2 bis FIG 5   Ausführungsbeispiele für eine Rückspeiseanordnung.

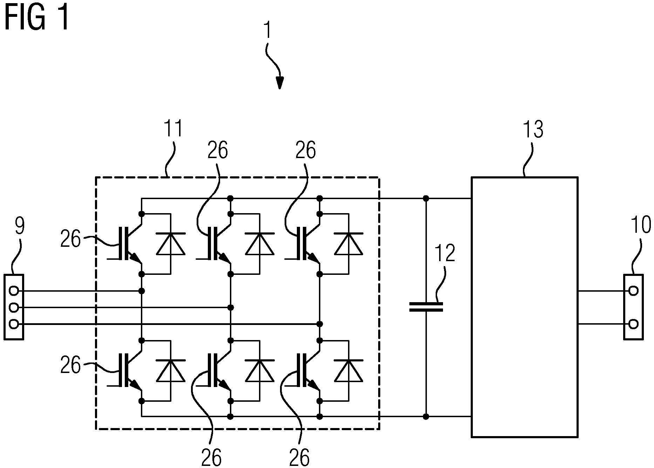

Die FIG 1 zeigt ein aktives Filter 1. Das aktive Filter 1 weist einen Gleichrichter 11, einen Koppelkondensator 12 und ein Kopplungselement 13 auf. Mit dem wechselspannungsseitigen Anschluss 9 ist das aktive Filter 1 mit einem hier nicht dargestellten Energieversorgungsnetz 5 verbindbar. Gleichspannungsseitig weist das aktive Filter 1 einen gleichspannungsseitige Anschluss 10 zur Verbindung mit einem Gleichspannungszwischenkreis 21 eines Energieversorgungssystems 2, wie beispielsweise eines elektrischen Antriebs, auf. Der Gleichrichter 11 umfasst dabei abschaltbaren Halbleiter 26, die in einer Brückenschaltung angeordnet sind.

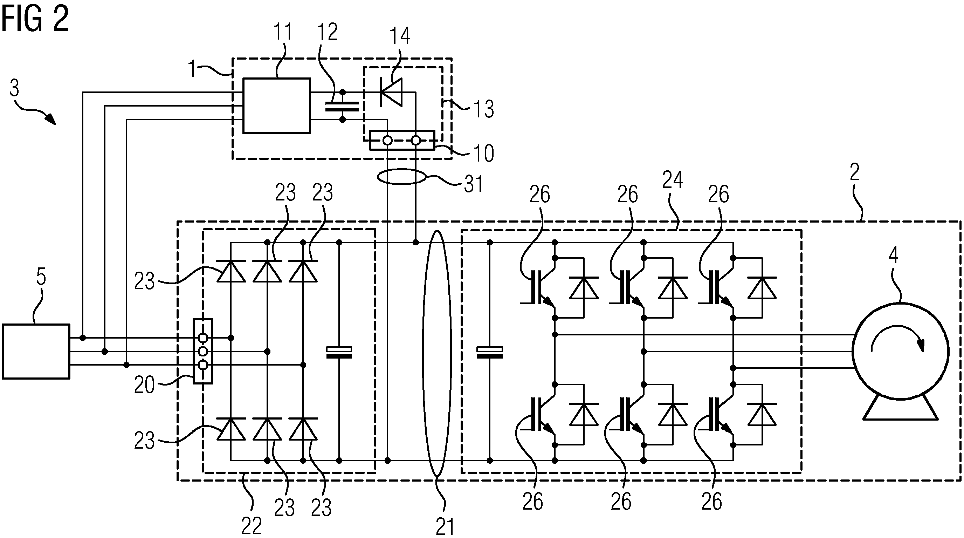

Die FIG 2 zeigt eine Rückspeiseanordnung 3. Die Rückspeiseanordnung 3 weist ein aktives Filter 1 und ein Energieversorgungssystem 2 auf. Diese sind über eine gleichspannungsseitige Verbindung 31 miteinander verbunden. Die Verbindung mit dem aktiven Filter 1 erfolgt über den gleichspannungsseitigen Anschluss 10. Darüber hinaus ist sowohl das aktive Filter 1 als auch das Energieversorgungssystem 2 elektrisch mit einem Energieversorgungsnetz 5 verbunden. Das Energieversorgungssystem 2 umfasst einen Eingangsgleichrichter 22, einen Gleichspannungszwischenkreis 21, einen Motor als rückspeisefähigen Verbraucher 4, sowie ein Stellglied 24. Das Stellglied 24 dient dazu, den Motor beispielsweise in Bezug auf sein Drehmoment steuern oder regeln zu können. Der Eingangsgleichrichter 22 weist nichtabschaltbare Halbleiter 23 in Form von Dioden auf. Mit diesem Eingangsgleichrichter 22 ist es möglich, über den wechselspannungsseitigen Netzanschluss 20, elektrische Energie aus dem Energieversorgungsnetz 5 zu beziehen und in eine Gleichspannung umzuwandeln. Dazu ist der Eingangsgleichrichter 22 über einen wechselspannungsseitigen Netzanschluss 20 mit dem Energieversorgungsnetz 5 verbunden.

Der Koppelkondensator 12 und der Gleichspannungszwischenkreis 21 sind über das Koppelelement 13 miteinander verbunden. Das Koppelelement 13 wird in diesem Ausführungsbeispiel durch einen Halbleiter 14, insbesondere durch eine Diode 14, gebildet. Die Diode 14 ist derart angeordnet, dass sie leitend wird wenn die Spannung des Gleichspannungszwischenkreises 21 größer ist als die Spannung am Koppelkondensator 12. Dies tritt genau dann ein, wenn der rückspeisefähige Verbraucher 4 Energie in den Gleichspannungszwischenkreis 21 zurückspeist. Da der Eingangsgleichrichter 22 nicht rückspeisefähig ist, wird die rückgespeiste Energie in den Kondensatoren des Gleichspannungszwischenkreises 21 gespeichert und bewirkt eine Anhebung der Spannung des Gleichspannungszwischenkreises 21. Sobald die Spannung des Gleichspannungszwischenkreises 21 die Spannung am Koppelkondensator 12 überschreitet, wird die Diode 14 leitend und es kann eine Rückspeisung von Energie über das aktive Netzfilter 1 in das Energieversorgungsnetz 5 erfolgen. Die Spannung am Koppelkondensator 12 ist aufgrund der Regelverfahren für selbstgeführte Stromrichter mit abschaltbaren Halbleitern 26 im Betrieb des aktiven Filters 1 größer ist als die Amplitude der Spannung zwischen zwei Phasen des Energieversorgungsnetzes 5. Da im leitenden Zustand der Diode 14 die Spannung am Gleichspannungszwischenkreis 21 dann auch größer sein muss als die Amplitude der Spannung zwischen zwei Phasen des Energieversorgungsnetzes 5 ist gleichzeitig sichergestellt, dass der Eingangsgleichrichter 22 gesperrt ist und keine Energie vom Energieversorgungsnetz 5 in den Gleichspannungszwischenkreis 21 überträgt.

Die Rückspeisung von elektrischer Energie über das aktive Filter 1 kann durch die Regelung oder Steuerung des aktiven Filters 1 geregelt oder gesteuert vorgenommen werden.

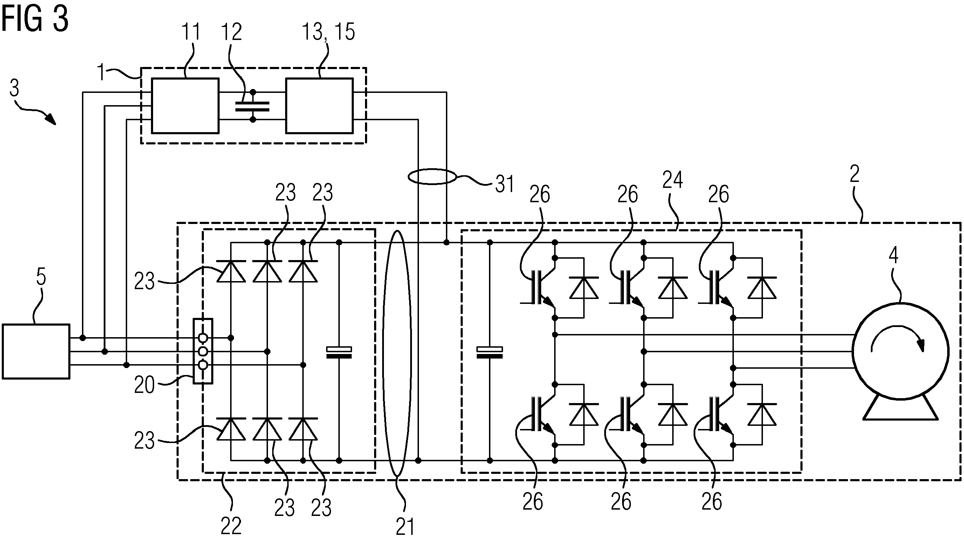

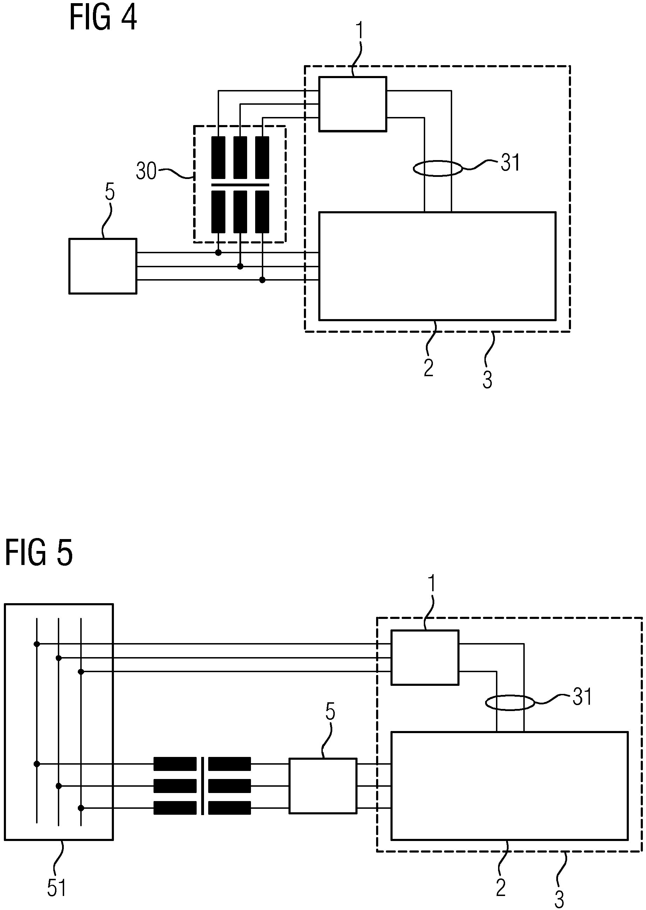

Die FIG 4 zeigt ein weiteres Ausführungsbeispiel einer Rückspeiseanordnung 3. Zur Vermeidung von Wiederholungen wird auf die Beschreibung zur FIG 3 sowie auf die dort eingeführten Bezugszeichen verwiesen. Im Wesentlichen unterscheidet sich dieses Ausführungsbeispiel vom vorhergehenden der FIG 3 dadurch, dass das Koppelelement 13 durch einen DC/DC Steller 15 gebildet wird. Mit diesem ist es möglich, einen Energieaustausch über die gleichspannungsseitige Verbindung 31 zwischen aktiven Filter 1 und Energieversorgungssystem 2 gesteuert oder geregelt vorzunehmen. Somit ist ein Leistungsaustausch zwischen Koppelkondensator 12 und Gleichspannungszwischenkreis 21 unabhängig von den Spannungen am Koppelkondensator 12 und Gleichspannungszwischenkreis 21 möglich. Dies bietet den Vorteil, dass auch wenn der Eingangsgleichrichter 22 Energie vom Energieversorgungsnetz 5 in den Gleichspannungszwischenkreis 21 überträgt, parallel dazu eine Übertragung von elektrischer Energie über das aktive Filter 1 vom Energieversorgungsnetz 5 in den Gleichspannungszwischenkreis 21 erfolgen kann. Damit wird die Leistungsfähigkeit des Energieversorgungssystems 2 erhöht.

Der Eingangsgleichrichter 22 weist in diesem Ausführungsbeispiel als nichtabschaltbaren Halbleiter 23 Thyristoren auf. Auch dieser Eingangsgleichrichter 22 ist in dieser Anordnung nicht rückspeisefähig, da die Polarität der Spannung im Gleichspannungszwischenkreis 21 aufgrund des Stellgliedes 24, das als selbstgeführter Stromrichter ausgebildet ist. Nicht umkehrbar ist.

Die Ausführungen bezüglich Eingangsgleichrichter 22 und Koppelelement 13 der Figuren 2 und 3 lassen sich beliebig kombinieren.

FIG 4 zeigt in einem weiteren Ausführungsbeispiel, wie das aktive Filter 1 über einen Transformator 30 mit dem Energieversorgungsnetz 5 verbunden ist. Das Übersetzungsverhältnis des Transformators 30 lässt sich so wählen, dass die Spannung am Koppelkondensator 12 nahezu beliebig vorgebbare ist. Darüber hinaus verhindert der Transformator 30 mit seiner galvanischen Trennung Ausgleichsvorgänge zwischen zwei Phasen des Energieversorgungsnetzes über die gleichspannungsseitige Verbindung 31 der Rückspeiseanordnung 3. Das aktive Filter 1 sowie das Energieversorgungssystem 2 können dabei beliebig, beispielsweise in einer Kombination der in FIG 3 und FIG 4 dargestellten Ausführungsbeispiele, ausgestaltet sein.

FIG 5 zeigt ein weiteres Ausführungsbeispiel für die Verbindung des aktiven Filters 1 und des Energieversorgungssystems 2 mit zwei unterschiedlichen Energieversorgungsnetzen 5,51. Dabei ist das Energieversorgungssystem 2 mit dem Energieversorgungsnetz 5 verbunden. Möglich ist, dass mit diesem Energieversorgungsnetz 5 weitere hier nicht dargestellte Energieversorgungssysteme 2 gespeist werden. Das aktive Filter 1 kann dabei mit einem weiteren Energieversorgungsnetz 51 verbunden werden, in dem es Netzrückwirkungen beseitigt. Dies ist insbesondere dann vorteilhaft, wenn das Energieversorgungsnetz 5 nicht zur Aufnahme elektrischer Energie bzw. Leistung geeignet ist. Auch kann es sich bei dem Energieversorgungsnetz 51, wie in dieser Figur dargestellt, um ein Spannungsnetz mit unterschiedlicher Nominalspannung handeln.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Zusammenfassend betrifft die Erfindung ein aktives Filter mit einem wechselspannungsseitigen Anschluss und einem Gleichrichter wobei der Gleichrichter abschaltbare Halbleiter aufweist, wobei der wechselspannungsseitige Anschluss mit einem Energieversorgungsnetz verbindbar ist. Zur Verbesserung der Versorgung eines rückspeisefähigen elektrischen Verbrauchers wird vorgeschlagen, dass das aktive Filter einen gleichspannungsseitigen Anschluss, einen Koppelkondensator und ein Kopplungselement aufweist, wobei der Gleichrichter wechselspannungsseitig mit dem wechselspannungsseitigen Anschluss verbunden ist, wobei der Gleichrichter gleichspannungsseitig elektrisch parallel zum Koppelkondensator angeordnet ist, wobei der gleichspannungsseitige Anschluss des aktiven Filters mit einem Gleichspannungszwischenkreis eines Energieversorgungssystems elektrisch verbindbar ist, wobei zwischen dem Koppelkondensator und dem gleichspannungsseitigen Anschluss des aktiven Filters das Kopplungselement derart angeordnet ist, dass mittels des Kopplungselements ein Energiefluss über den gleichspannungsseitigen Anschluss zwischen dem aktiven Filter und dem Gleichspannungszwischenkreis des Energieversorgungssystems beeinflussbar ist. Die Erfindung betrifft weiter eine Rückspeiseanordnung mit einem solchen aktiven Filter und einem Energieversorgungssystem wobei das Energieversorgungssystem einen wechselspannungsseitigen Netzanschluss, einen Eingangsgleichrichter, einen Gleichspannungszwischenkreis und einen rückspeisefähigen Verbraucher aufweist, wobei der Eingangsgleichrichter nichtabschaltbare Halbleiter aufweist, wobei der Netzanschluss und der Gleichspannungszwischenkreis über den Eingangsgleichrichter miteinander elektrisch verbunden sind, wobei der wechselspannungsseitige Anschluss des aktiven Filters mit dem Energieversorgungsnetz verbunden ist, wobei der wechselspannungsseitige Netzanschluss mit dem Energieversorgungsnetz oder einem weiteren Energieversorgungsnetz verbunden ist, wobei der gleichspannungsseitige Anschluss des aktiven Filters mit dem Gleichspannungszwischenkreis des Energieversorgungssystems elektrisch verbunden ist, wobei mittels des aktiven Filters eine vom rückspeisefähigen Verbraucher in den Gleichspannungszwischenkreis rückgespeiste Energie in das Energieversorgungsnetz einspeisbar ist. Ferner betrifft die Erfindung ein Verfahren zum Betreiben eines solchen aktiven Filters, wobei der wechselspannungsseitige Anschluss des aktiven Filters mit dem Energieversorgungsnetz verbunden ist, wobei die abschaltbaren Halbleiter des Gleichrichters zumindest zeitweise derart angesteuert werden, dass elektrische Leistung, insbesondere elektrische Wirkleitung, von dem gleichspannungsseitigen Anschluss in das Energieversorgungsnetz übertragen wird.

**Patentansprüche**

1. Aktives Filter (1), aufweisend

    - einen wechselspannungsseitigen Anschluss (9),
    - einen gleichspannungsseitigen Anschluss (10),
    - einen Gleichrichter (11),
    - einen Koppelkondensator (12) und
    - ein Kopplungselement (13)

    wobei der Gleichrichter (11) abschaltbare Halbleiter (26) aufweist,
    wobei der wechselspannungsseitige Anschluss (9) mit einem Energieversorgungsnetz (5) verbindbar ist,
    wobei der Gleichrichter (11) wechselspannungsseitig mit dem wechselspannungsseitigen Anschluss (9) verbunden ist,
    wobei der Gleichrichter (11) gleichspannungsseitig elektrisch parallel zum Koppelkondensator (12) angeordnet ist,
    wobei der gleichspannungsseitige Anschluss (10) des aktiven Filters (1) mit einem Gleichspannungszwischenkreis (21) eines Energieversorgungssystems (2) elektrisch verbindbar ist, wobei zwischen dem Koppelkondensator (12) und dem gleichspannungsseitigen Anschluss (10) des aktiven Filters (1) das Kopplungselement (13) derart angeordnet ist, dass mittels des Kopplungselements (13) ein Energiefluss über den gleichspannungsseitigen Anschluss (10) zwischen dem aktiven Filter (1) und dem Gleichspannungszwischenkreis (21) des Energieversorgungssystems (2) beeinflussbar ist.

2. Aktives Filter (1) nach Anspruch 1, wobei das Kopplungselement (13) einen Halbleiter (14), insbesondere eine Diode, aufweist, wobei der Halbleiter (14) derart zwischen Koppelkondensator (12) und gleichspannungsseitigem Anschluss (10) angeordnet ist, dass über den gleichspannungsseitigen Anschluss (10) elektrische Energie zum Koppelkondensator (12) übertragbar ist und ein Energiefluss von Koppelkondensator (12) zu dem gleichspannungsseitigen Anschluss (10) verhindert wird.

3. Aktives Filter (1) nach Anspruch 1, wobei das Kopplungselement (13) durch einen DC/DC Steller (15) gebildet wird, wobei der DC/DC Steller (15) derart ausgebildet ist, dass ein Energiefluss über den gleichspannungsseitigen Anschluss (10) zwischen dem aktiven Filter (1) und Gleichspannungszwischenkreis (21) des Energieversorgungssystems (2) steuerbar ist.

4. Rückspeiseanordnung (3), aufweisend

    - ein aktives Filter (1) nach einem der Ansprüche 1 bis 3 und
    - ein Energieversorgungssystem (2),

    wobei das Energieversorgungssystem (2) einen wechselspannungsseitigen Netzanschluss (20), einen Eingangsgleichrichter (22), einen Gleichspannungszwischenkreis (21) und einen rückspeisefähigen Verbraucher (4) aufweist,
    wobei der Eingangsgleichrichter (22) nichtabschaltbare Halbleiter (23) aufweist,
    wobei der Netzanschluss (20) und der Gleichspannungszwischenkreis (21) über den Eingangsgleichrichter (22) miteinander elektrisch verbunden sind, wobei der wechselspannungsseitige Anschluss (9) des aktiven Filters (1) mit dem Energieversorgungsnetz (5) verbunden ist, wobei der wechselspannungsseitige Netzanschluss (20) mit dem Energieversorgungsnetz (5) oder einem weiteren Energieversorgungsnetz (51) verbunden ist,
wobei der gleichspannungsseitige Anschluss (10) des aktiven Filters (1) mit dem Gleichspannungszwischenkreis (21) des Energieversorgungssystems (2) elektrisch verbunden ist, wobei mittels des aktiven Filters (1) eine vom rückspeisefähigen Verbraucher (4) in den Gleichspannungszwischenkreis (21) rückgespeiste Energie in das Energieversorgungsnetz (5) einspeisbar ist.

5. Rückspeiseanordnung (3) nach Anspruch 4, wobei zwischen dem Energieversorgungsnetz (5) und wechselspannungsseitigen Anschluss (9) ein Transformator (30) angeordnet ist.

6. Verfahren zum Betreiben eines aktiven Filters (1) nach einem der Ansprüche 1 bis 3, wobei der wechselspannungsseitige Anschluss (9) des aktiven Filters (1) mit dem Energieversorgungsnetz (5) verbunden ist,
wobei die abschaltbaren Halbleiter des Gleichrichters (11) zumindest zeitweise derart angesteuert werden, dass elektrische Leistung, insbesondere elektrische Wirkleitung, von dem gleichspannungsseitigen Anschluss (10) in das Energieversorgungsnetz (5) übertragen wird.

FIG 1

FIG 2

FIG 3

FIG 4

FIG 5

**Europäisches Patentamt**
**European Patent Office**
**Office européen des brevets**

# EUROPÄISCHER RECHERCHENBERICHT

Nummer der Anmeldung

EP 15 18 7656

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | FR 2 737 946 A1 (ELECTRICITE DE FRANCE [FR]) 21. Februar 1997 (1997-02-21) * Abbildung 2 * ----- | 1-6 | INV. H02M1/12 H02M1/42 H02J3/01 H02M5/458 |
| A | EP 2 645 215 A1 (SIEMENS AG [DE]) 2. Oktober 2013 (2013-10-02) * das ganze Dokument * ----- | 1 | |
| A | WO 2009/021901 A1 (SIEMENS AG [DE]; HEIL KARSTEN [DE]; SCHWESIG GUENTER [DE]; SEEGER GUID) 19. Februar 2009 (2009-02-19) * das ganze Dokument * ----- | 1 | |

**RECHERCHIERTE SACHGEBIETE (IPC)**

H02M
H02J

Der vorliegende Recherchenbericht wurde für alle Patentansprüche erstellt

| Recherchenort | Abschlußdatum der Recherche | Prüfer |
|---|---|---|
| Den Haag | 10. März 2016 | Taccoen, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
### ÜBER DIE EUROPÄISCHE PATENTANMELDUNG NR.

EP 15 18 7656

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-03-2016

| Im Recherchenbericht angeführtes Patentdokument | Datum der Veröffentlichung | Mitglied(er) der Patentfamilie | Datum der Veröffentlichung |
|---|---|---|---|
| FR 2737946 A1 | 21-02-1997 | KEINE | |
| EP 2645215 A1 | 02-10-2013 | CN 103365460 A<br>EP 2645215 A1<br>US 2013257921 A1 | 23-10-2013<br>02-10-2013<br>03-10-2013 |
| WO 2009021901 A1 | 19-02-2009 | DE 102007038722 A1<br>US 2011202146 A1<br>WO 2009021901 A1 | 26-02-2009<br>18-08-2011<br>19-02-2009 |

EPO FORM P0461

Für nähere Einzelheiten zu diesem Anhang : siehe Amtsblatt des Europäischen Patentamts, Nr.12/82